# EUROPEAN PATENT APPLICATION

(11) **EP 4 786 359 A1**
(43) Date of publication of application: **05.08.2026**
(21) Application number: 25155889.6
(22) Date of filing: 04.02.2025
(51) Int. Cl.: B65D 6/16, B65G 1/04

(54) **BIN FOR AUTOMATED STORAGE AND RETRIEVAL SYSTEM**

(71) Applicant: AutoStore Technology AS, 5578 Nedre Vats (NO)
(72) Inventor: AUSTRHEIM, Trond, 5578 Nedre Vats (NO); FJELDHEIM, Ivar, 5578 Nedre Vats (NO)
(74) Representative: Kilburn & Strode LLP

(57) **Abstract**

The disclosure relates to a bin for an automated storage and retrieval system, said bin comprising four generally vertical sides and a base, at least one of the vertical sides comprising an openable hatch.

## Description

### TECHNICAL FIELD

The disclosure relates to a bin for an automated storage and retrieval system. More particularly, it relates to a bin, wherein the bin includes one or more openable hatches.

### BACKGROUND

Traditional storage solutions usually involve the arrangement of goods on rows of shelves within a warehouse. The shelf location for each item is recorded in an inventory, and goods are retrieved from the shelves by a stock picker. The shelves are re-stocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Containers or bins used in the grid are open allowing goods to be picked or packed into the container from above.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows an underside perspective view of the robot of Fig. 3B;
Fig. 6 shows an example bin with end hatches in their closed or lowered positions;
Fig. 7 shows the bin of Fig. 6 with one end hatch in an open position;
Fig. 8 shows the bin of fig. 6 with both end hatches in an open or raised positions; and
Fig. 9 shows a top perspective view showing an enlarged view of the guide for an end hatch of the bin of Fig. 6.

### DETAILED DESCRIPTION

In overview, the disclosure relates to a bin for an automated storage and retrieval system, said bin comprising four generally vertical sides and a base, at least one of the vertical sides comprising an openable hatch. The bin is formed preferably as a rectangular cuboid. The bin is preferably open at its top in addition to having an openable hatch in one of the vertical sides.

### Automated storage and retrieval system overview

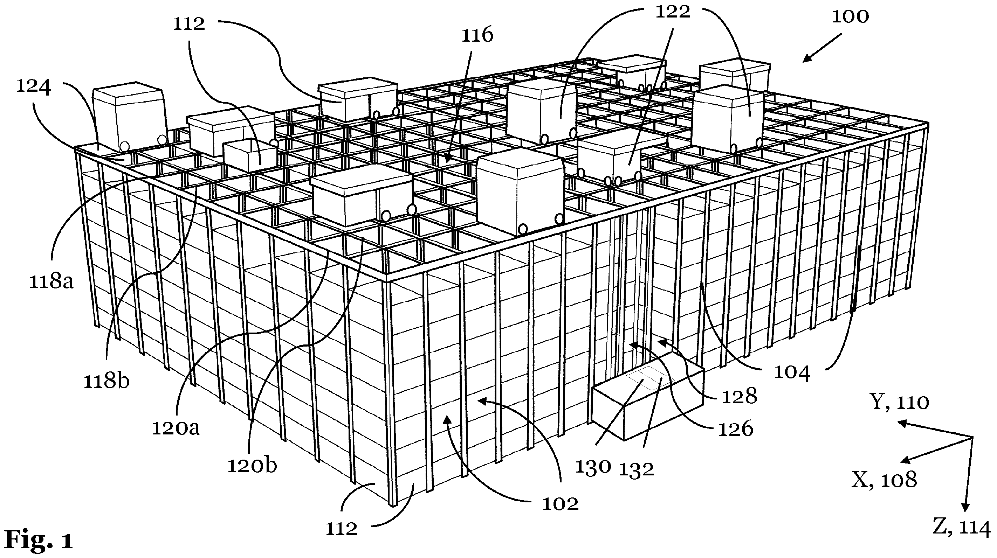

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

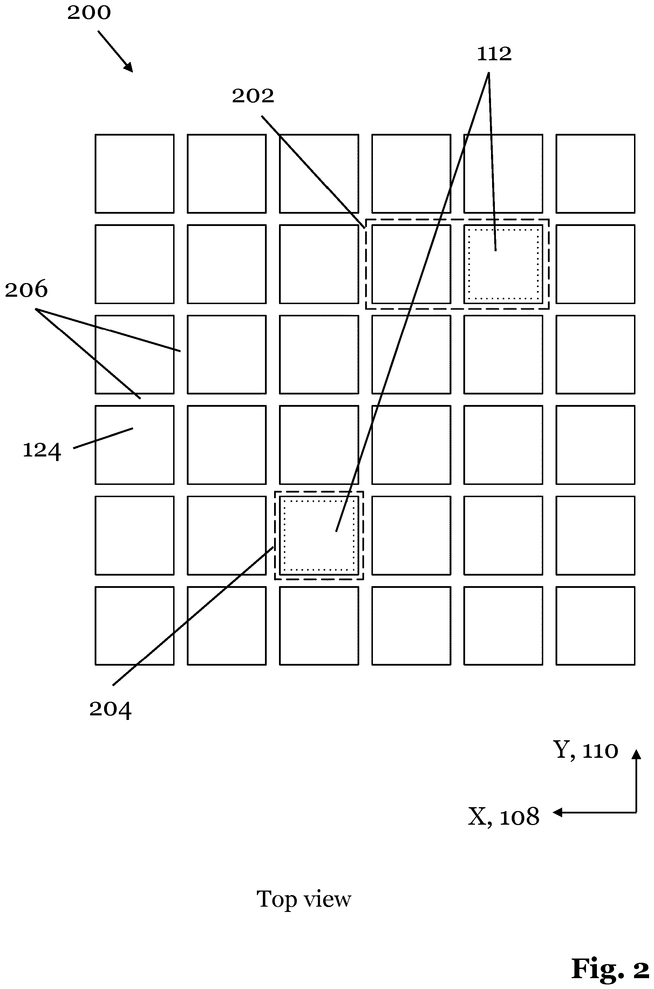

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

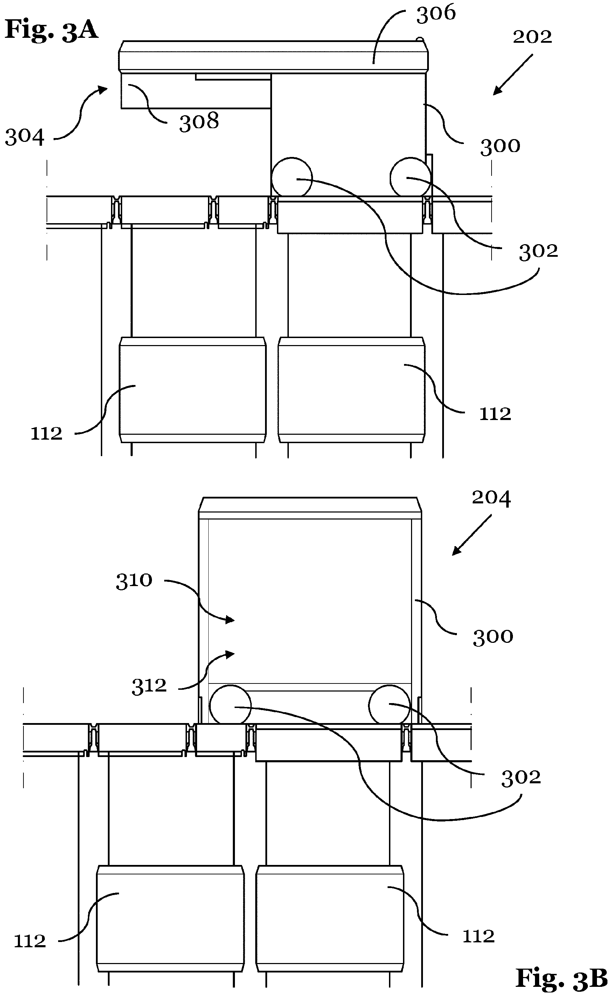

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

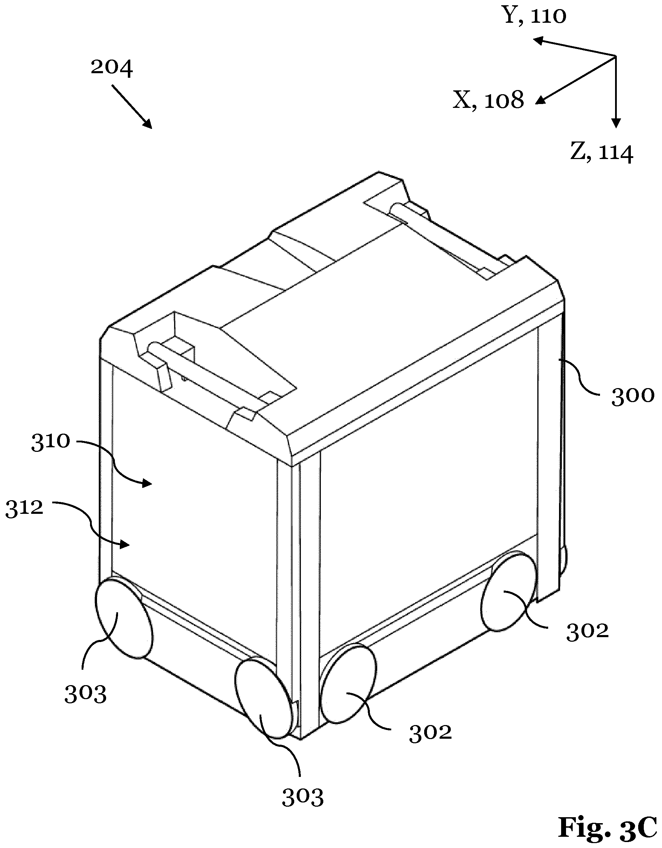

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

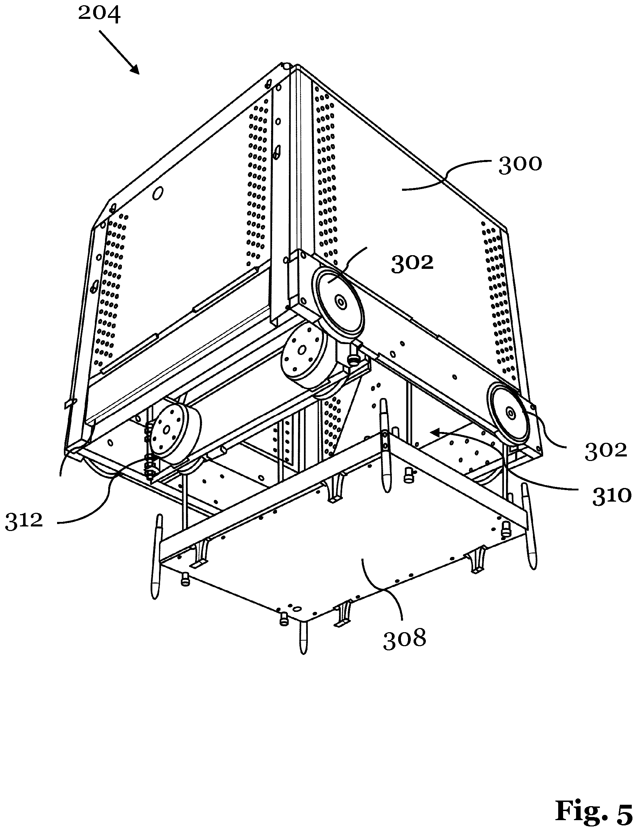

Fig. 5 shows a an underside perspective view of robot 204. From this view, it can be seen the internal cavity 310 within the body 300 and in which the lifting device 312 including a gripping device 308 is located. The gripping device 308 can be lowered to grip a bin.

### Control and monitoring system

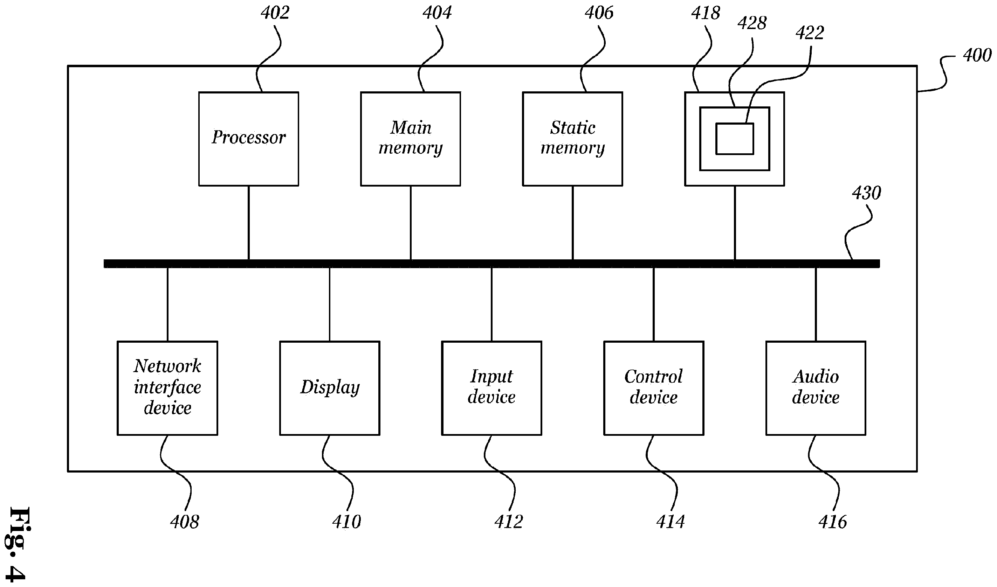

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin or container 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Bin

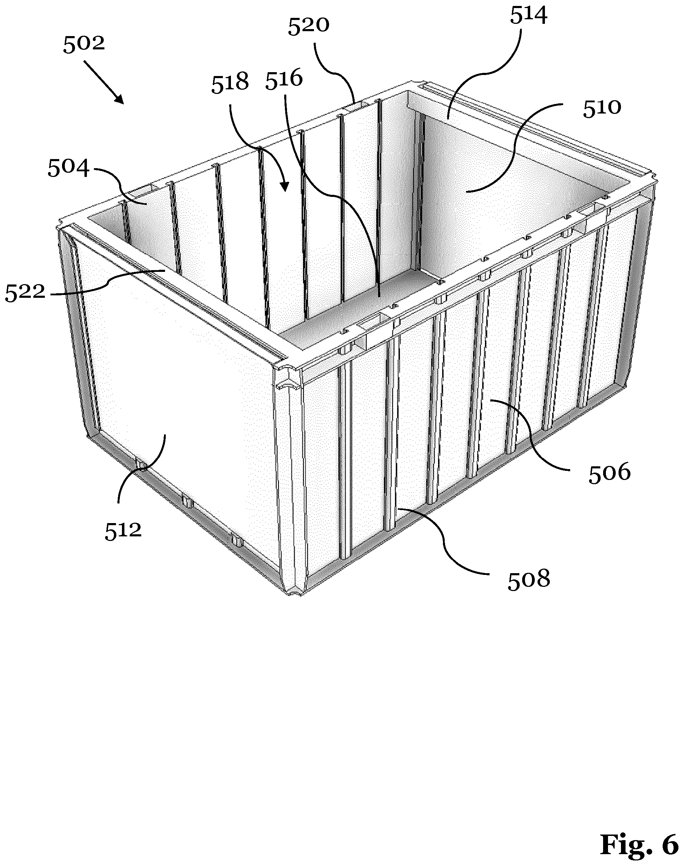

Fig. 6 shows a bin 502 formed generally as a rectangular cuboid. The bin 502 comprises opposing parallel rectangular side walls 504, 506 atop rectangular base 516. Side walls 504, 506 are generally planar and may be formed with strengthening forms or members, such as parallel spaced vertical ribs 508. At each of the opposing ends of the bin 502, a cross member 514, 522 is provided which extends perpendicularly between the inner surfaces of the side walls 504, 506. The cross-members 514, 522 are aligned with the top edge of the side walls 504, 506. The cross-members 514, 522, rectangular base 516 and side walls 504, 506 provide a generally rectangular opening at each end of the bin 502. Each end of the bin 502 is provided with a hatch 512, 510 formed as a generally rectangular planar member with an area which corresponds substantially with the full area of the end of the bin. The hatches may alternatively take up a smaller proportion of the side of the bin. The upper edges of the side walls 504, 506 and parallel cross-members 514, 522 define a rectangular opening 518 in the top of the bin 502. With the hatches 512, 510 in their closed lowermost positions, all the vertical sides of the bin 502 are closed such that items can be contained within the bin. It is envisaged that the side walls 504, 506 and/or hatches 512, 510 may not be completely closed. For example, some openings may be provided. This can reduce the amount of material used in the construction of the bin 502 and/or to provide ventilation whilst still serving to contain items within the bin 502. The bin 502 can serve similarly as a bin within the automated storage and retrieval system as described in relation to Figs. 1 to 4, for example, multiple bins 502 may be stacked within the grid. A robot, such as that described in relation to Figs. 3A to 3C and 5 may be used to handle bin 502. A robot may lower its gripping device 308, which engages at the four attachment points 520 located on the top edge of the side walls 504, 506 and grips and lifts the bin 502 to the robot.

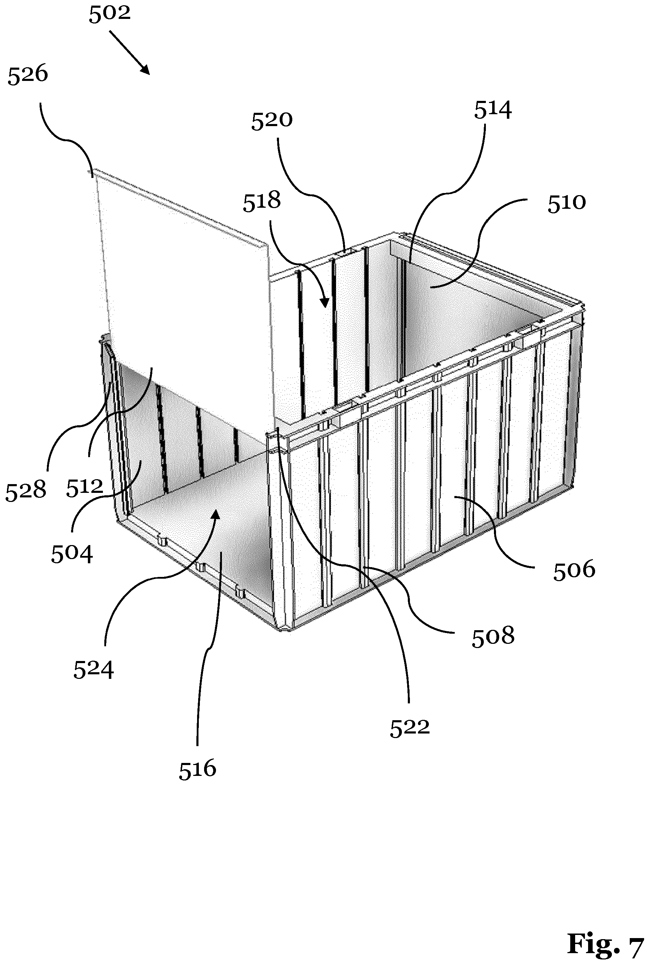

Fig. 7 shows the bin 502 of Fig 6 with one end hatch 512 in an open position. To open the hatch 512, it may be slid manually or by a handling machine vertically upwards in a linear direction. A lip 526 along the top edge of the hatch 512 may facilitate gripping and lifting of the hatch 512. The hatch 512 is guided by parallel spaced vertical slots or grooves 528 locating at the end of the opposing side walls 504, 506. When hatch 512 is raised, an opening 524 is provided at one end of the bin 502. End opening 524 may be used to load items into the bin 502 from the side. The hatch 512 may provide an opening which is substantially the same size or area as the end side of the bin 502 to facilitate access to the interior of the bin 502. Once loading is complete, the hatch 512 may be lowered to secure the contents on the bin 502. It will be understood that the opening 524 may equally be used to remove items from bin 502 or otherwise provide access to the bin from the side or end.

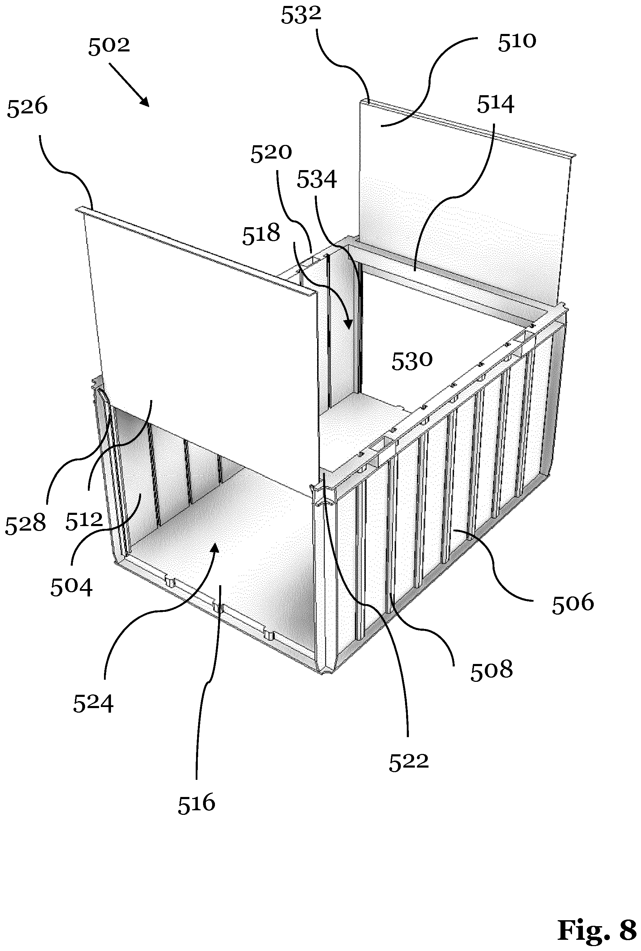

Fig. 8 shows the bin 502 of Fig 6 with both end hatches 512, 510 in their open positions. To open the hatches 512 or 510, the hatches 512, 510 may be slid manually or by a handling machine vertically upwards. Lips 526, 532 along the top edges of respective hatches 512, 510 may facilitate gripping and lifting the hatches 512, 510. The hatches 512, 510 are guided by vertical slots or grooves 528, 534 locating at the end of the opposing side walls 504, 506. When both hatches 512, 510 are raised, openings 524, 530 are provided at each end of the bin 502. The end openings 524, 530 may be used to load items into the bin 502 from the end side. Once loading is complete, the hatches 512, 510 may be lowered to secure the contents on the bin 502. It will be understood that the openings 524, 530 may equally be used to remove items from bin 502, which may include pushing items from opening 524 to opening 530. As can be seen in Figs. 7 and 8, when both the hatches 512, 510 are opened, the bottom inner surface 516 of the bin 502 is free of physical interruptions such that items can slide freely on the surface of the bottom 516 of the bin 502, which can allow items to be inserted into the bin from the end of the bin 502 and also pushing out items from the other end of the bin 502.

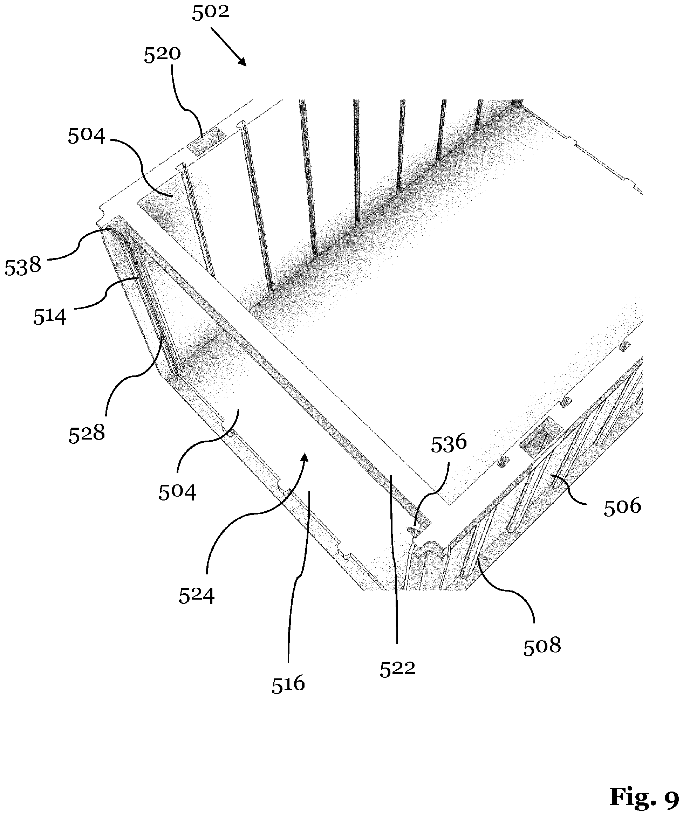

Fig. 9 shows an enlarged detail view of bin 502. The vertical guides 514 which are provided on opposing side walls 504, 506 are formed as grooves or channels to guide the movement of the hatches 512, 510 as described in relation to Figs. 7 and 8. The guides may alternatively be formed as grooves in the side edges of a hatch into which a flange or protrusion extending from the side wall is located. The hatches 512, 510 can be completely removed. In order to facilitate reinsertion of a hatch 512, 510 into a respective guide 514, in the example, each guide 514 is provided with an outwardly tapering section 536, 538 at its top end in order to receive and accommodate a misaligned hatch to direct it to the guides 514.

The vertical guides 514 are sized or configured, for example, in relation to the thickness of the hatches 512, 510 such that the hatches may slide freely under the force of gravity to close the side. Alternatively, a friction fit between hatch and bin may allow the hatches to be opened and remain in position. When a bin 502 is lifted with gripping device 308 using engaged in the attachment points 520, vertical movement of the hatches 512, 510 is prevented such that items within the bin are secured.

The bin 502 including the hatches 512, 510 may be formed of any suitable material, such as a plastics material. Whilst a bin 502 with two end hatches 512, 510 has been described, a bin with one end hatch may be provided or with more than two side hatches, for example in three or more of the four vertical sides. Although the end hatches in the example describe may be opened and closed by movement in a vertical direction, it is envisaged that the hatches may be hinged vertically or horizontally. Segmented hatches may also be used which retract by rolling around a shaft. The hatches may comprise a single or multiple parts which may be retracted independently of one another.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A bin for an automated storage and retrieval system, said bin comprising four generally vertical sides and a base to define a cuboid, at least one of the vertical sides comprising an openable hatch.

2. A bin according to claim 1, wherein the openable hatch is linearly moveable.

3. A bin according to claim 1 or 2, wherein the bin comprises guides for guiding said openable hatch as it is opened.

4. A bin according to claim 3, wherein the guides comprise linear grooves.

5. A bin according to claim 3 or 4, wherein the guides comprise an enlarged portion to facilitate insertion of the hatch.

6. A bin according to any of the preceding claims, wherein the openable hatch is completely removeable from the bin.

7. A bin according to any of the preceding claims, wherein hatch corresponds substantially to the full area of a side of the bin.

8. A bin according to any of the preceding claims, wherein the bin is open at its top side.

9. A bin according to any of the preceding claims, wherein the hatch includes a gripping section for gripping to facilitate moving by a user or bin handling device.

10. A bin according to any of the preceding claims, wherein the bin comprises two openable hatches.

11. A bin according to claim 10, wherein the openable hatches are in opposing vertical sides of the bin.

12. A bin according to any of the preceding claims, wherein the bin comprises attachment points for coupling with a gripping device of a container handling robot of an automated storage and retrieval system.

13. A bin handling device for handing a bin according to any of the preceding claims, the bin handling device configured to open the openable hatch.

14. An automated storage and retrieval system comprising one or more bins according to any of claims 1 to 12.

15. A method of handling a bin according to any of claim 1 to 12, the method comprising opening the hatch and inserting into or removing items from the bin.
